(19) Europäisches Patentamt
European Patent Office
Office européen des brevets

(11) **EP 4 283 619 A1**

(12) **EUROPEAN PATENT APPLICATION**

(43) Date of publication:
**29.11.2023 Bulletin 2023/48**

(21) Application number: **22174904.7**

(22) Date of filing: **23.05.2022**

(51) International Patent Classification (IPC):
**G11B 27/036** (2006.01)   **G11B 27/10** (2006.01)
**G11B 27/11** (2006.01)   **G11B 27/30** (2006.01)
**G06Q 30/02** (2023.01)   **H04N 21/00** (2011.01)

(52) Cooperative Patent Classification (CPC):
**G11B 27/036; G06Q 30/02; G11B 27/10;
G11B 27/11; G11B 27/3081; H04N 21/44012;
H04N 21/854**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Mirriad Advertising PLC
London SE1 0BE (GB)**

(72) Inventor: **PAVELKOVIC, Dean
London SE1B0BE (GB)**

(74) Representative: **Horler, Philip John
Withers & Rogers LLP
2 London Bridge
London SE1 9RA (GB)**

(54) **INCORPORATING VISUAL OBJECTS INTO VIDEO MATERIAL**

(57)    The present disclosure relates to a computer implemented method of displaying source video material and a visual object so that the visual object appears visually incorporated with the source video material, the source video material comprising a plurality of source images. The method comprises: obtaining video data comprising a plurality of frames, wherein each frame has a first region including a respective source image of the source video material, each source image comprising an insertion zone that is suitable for insertion of the visual object; obtaining, for each frame, position data indicative of a position of the insertion zone in the first region of the frame; obtaining a visual object; and sequentially displaying, at a frame rate and in a display area, the first region of each frame. The method further comprises, as the first region of a current frame is being displayed in the display area: determining a position for the visual object in the display area based on the position data, such that the visual object will appear within the insertion zone in the first region of the current frame when the visual object is displayed in the display area at the determined position, and displaying the visual object in the display area at the determined position.

FIG. 3

**Description**

TECHNICAL FIELD

The present disclosure relates to a computer implemented method, a computer-readable medium and a device for displaying source video material and a visual object so that the visual object appears visually incorporated with the source video material. The present disclosure also relates to a computer implemented method of generating video data, and a computer implemented method of transmitting video data.

BACKGROUND

With the advent of digital file processing, it is possible to digitally insert an object (also referred to herein as an "embed") into the image content of a video. Digitally inserting objects in a video may have many benefits, for example enhancing the visual effects of the video, or improving the realism of a video, or allowing more flexibility for the video after it is shot, meaning that fewer decisions need to be made regarding objects to include in a scene at the stage of filming the scene. Consequently, digital object insertion is becoming increasingly common and utilised by video makers for all manner of purposes.

Digital object insertion is often carried out by specialists who use specialised compositing software, such as Adobe™ PhotoShop™ and AfterEffects™, and Nuke™ from The Foundry™. Such compositing software is often expensive and difficult to use. Running such compositing software also usually requires powerful desktop computers, which are expensive.

SUMMARY OF THE DISCLOSURE

According to a first aspect of the present disclosure, there is provided a computer implemented method of displaying source video material and a visual object so that the visual object appears visually incorporated with the source video material, the source video material comprising a plurality of source images. The method comprises: obtaining video data comprising a plurality of frames, wherein each frame has a first region including a respective source image of the source video material, each source image comprising an insertion zone that is suitable for insertion of the visual object; obtaining, for each frame, position data indicative of a position of the insertion zone in the first region of the frame; obtaining a visual object; and sequentially displaying, at a frame rate and in a display area, the first region of each frame. The method further comprises, as the first region of a current frame is being displayed in the display area: determining a position for the visual object in the display area based on the position data, such that the visual object will appear within the insertion zone in the first region of the current frame when the visual object is displayed in the display area at the determined position, and displaying the visual object in the display area at the determined position.

Advantageously, the method may allow for a visual object to be visually incorporated with source video material using simple and inexpensive computing hardware. Moreover, the position of the insertion zone can change between different source images. For example, as the camera angle/position changes between source images, the insertion zone may appear to have a different position (e.g. shape, size, and/or location) between different source images. Advantageously, the position data is able to account for the current position of the insertion zone, and therefore the visual object can be positioned to appear inside the insertion zone as the position of the insertion zone changes from frame to frame. By ensuring that the visual object is correctly positioned, the visual object may appear more realistically incorporated into the source video material.

In some examples, each frame of the video data further comprises a second region that encodes blend information, the blend information being indicative of one or more levels of blending to be applied between the visual object and image content of the insertion zone. When the visual object is displayed in the display area at the determined position, the image content of the insertion zone is blended with the visual object based on the blend information encoded in the second region of the current frame.

In some computing environments, such as in web browsers, it is difficult to synchronise two streams of information. For example, it can be difficult to synchronise the frames of two separate videos. Therefore, if source images and blend information (e.g. matte images) are loaded from separate files, then it may be difficult to apply the correct blend information to the correct source image. Advantageously, a source image and the corresponding blend information may be provided in the same frame of the video data. As such, since the blend information is present in the same frame as the source image, the correct blend information is readily available. This avoids synchronisation problems between the source images and the blend information. Consequently, visual object insertion can be better achieved in web browsers, without requiring the use of sophisticated software packages or powerful desktop computers.

In some examples, for at least one frame of the plurality of frames: the image content of the insertion zone comprises a first area; and the blend information is indicative of a first level of blending to be applied between the first area of the insertion zone and a corresponding first area of the visual object, the first level being between a maximum level and a minimum level such that a visual blend between the first area of the image content of the insertion zone and the corresponding first area of the visual object is displayed in the insertion zone when the visual object is displayed in the display area at the determined position.

Advantageously, blending the image content of the insertion zone with the visual object can help the final result appear more realistic. For example, the image content in the insertion zone can include reflections, shadows or other effects. Blending the reflections and/or shadows with the visual object can help the visual object appear to be more realistically incorporated into the source video.

In some examples, the image content of the insertion zone further comprises a second area; and the blend information is indicative of a second level of blending to be applied between the second area of the insertion zone and a corresponding second area of the visual object, the second level corresponding to the minimum level such that the second area of the image content of the insertion zone is visible and the corresponding second area of the visual object is not visible in the insertion zone when the visual object is displayed in the display area at the determined position.

Consequently, part of the image content of the insertion zone will remain visible in the insertion zone. A corresponding part of the visual object will not be visible. This can allow "foreground objects" which occlude part of the insertion zone to appear in front of the visual object. As such, the visual object will appear more realistically in the source video material, even in the presence of foreground objects that occlude the insertion zone.

In some examples, the image content of the insertion zone further comprises a third area; and the blend information is indicative of a third level of blending to be applied between the third area of the insertion zone and a corresponding third area of the visual object, the third level being between the maximum level and the minimum level and different to the first level, such that a visual blend between the third area of the image content of the insertion zone and the corresponding third area of the visual object is displayed in the insertion zone when the visual object is displayed in the display area at the determined position.

Advantageously, motion blur of the foreground object can be visible in the final result, providing for more realistic visual object insertion.

In some examples, for at least one frame of the plurality of frames: the image content of the insertion zone comprises a first area; and the blend information is indicative of a first level of blending to be applied between the first area of the insertion zone and a corresponding first area of the visual object, the first level corresponding to a maximum level such that the first area of the image content of the insertion zone is not visible and the corresponding first area of the visual object is visible in the insertion zone when the visual object is displayed in the display area at the determined position.

In some examples, for each pixel of the insertion zone, the second region comprises a pixel that encodes a level of blending to be applied between the pixel in the insertion zone and a corresponding pixel of the visual object. Advantageously, the blend information can be easily determined and used on a pixel-by-pixel basis.

In some examples, each frame of the video data is associated with a unique ID, and wherein for each frame, the position data indicative of the position of the insertion zone in the first region of the frame is associated with the unique ID of the frame, and wherein the method further comprises, as the first region of the current frame is being displayed in the display area:

determining the unique ID associated with the current frame, and
determining the position for the visual object in the display area based on the position data that is associated with the determined unique ID.

Advantageously, the correct position data can be used to position the visual object, so that the visual object appears within the insertion zone of the current frame.

In some examples, for each frame, the frame comprises a third region, wherein the third region encodes the unique ID that is associated with said frame, and wherein determining the unique ID associated with the current frame comprises decoding the unique ID from the third region of the current frame.

In some computing environments, such as web browser environments, it is difficult to determine the current frame of a video that is being displayed. As such, it can be difficult to know which position data to use to position the visual object. By encoding the unique ID in the frame of the video data, it is possible to determine which frame is currently being displayed, and therefore which position data to use. More advantageously, the unique ID can be discretely encoded in the frame of the video data without affecting playback of the video.

In some examples, the plurality of frames of the video data comprises at least a first subset of frames and a second subset of frames. Each frame of the first subset is associated a respective frame ID, and each frame of the second is associated with the same frame ID to a respective frame of the first subset. Furthermore, the method further comprises: sequentially displaying from a time t, at a frame rate and in a display area, the first region of each frame of the plurality of frames; and as the first region of the current frame is being displayed in the display area: determining the frame ID associated with the current frame, and a current time indicative of a time elapsed since the time t, identifying the position data associated with the current frame based on the current time and the determined frame ID, and determining the position for the visual object in the display area based on the identified position data, such that the visual object will appear within the insertion zone in the first region of the current frame when the visual object is displayed in the display area at the determined position.

Advantageously, the correct position data can be used to position the visual object in the insertion zone of the current frame, even when frames of the video data are associated with the same frame ID. This may occur, for example, if multiple videos are appended to one another or concatenated in order to form the video data.

In some examples, identifying the position data associated with the current frame comprises: calculating a first estimate of the current time based on a frame of the first subset that is associated with the determined frame ID, and a second estimate of the current time based on a frame of the second subset that is associated with the determined frame ID; calculating a first error between the current time and the first estimate of the current time, and a second error between the current time and the second estimate of the current time; if the first error is less than the second error, then identifying the position data that is associated with said frame of the first subset; and if the first error is greater than the second error, then identifying the position data that is associated with said frame of the second subset.

In some examples, each frame of the plurality of frames comprises a third region, wherein the third region of each frame encodes the respective frame ID; and wherein the frame ID is determined by decoding the frame ID from the third region of the current frame.

In some examples, each frame of the video data is associated with a unique ID, and the method further comprises: obtaining, for each frame, processing data comprising at least one image processing parameter suitable for applying to the visual object, the processing data being associated with the unique ID of the frame; and as the first region of the current frame is being displayed in the display area: processing the visual object based on the processing data associated with the determined unique ID, optionally wherein the processing data comprises one or more of: a blur effect parameter, a grain effect parameter or a colour correction parameter.

Advantageously, additional effects can be applied to the visual object from frame to frame. This can allow the visual object to appear more realistically incorporated into the source video material.

In some examples, the position data is indicative of boundaries of the insertion zone. Advantageously, the position data does not need to define a location of every pixel in the insertion zone, and therefore the position data does not require a significant amount of storage space or network bandwidth for transmission.

In some examples, the position data comprises pixel coordinates, the pixel coordinates corresponding to vertices of the insertion zone. Advantageously, the position data can comprise just a few pixel coordinates, and therefore further reduces the amount of storage space needed or network bandwidth needed for transmission.

In some examples, the position data is indicative of a transformation to be applied to the visual object such that the visual object will appear within the insertion zone in the first region of the current frame when the visual object is displayed in the display area. The transformation may comprise one or more of a rotation and a translation. Advantageously, 3D transformations can be used and applied to the visual object so that the visual object appears better incorporated within the insertion zone.

In some examples, the visual object is a video, an image, or a 3D object. Advantageously, the method allows for different types of visual object to be incorporated into the source video material.

In some examples, obtaining the visual object comprises prompting a user to upload or select a visual object. Advantageously, a user can test any visual object with the source video material, without requiring the services of a specialist, or without requiring sophisticated compositing software and powerful desktop computers.

According to a second aspect of the present disclosure, there is provided a computer-implemented method comprising: transmitting over a network to an electronic device:

video data comprising a plurality of frames, wherein each frame comprises a first region comprising a respective source image of source video material, each source image comprising an insertion zone that is suitable for insertion of a visual object; and for each frame, position data indicative of a position of the insertion zone in the first region of the frame for use by the electronic device to determine a position for the visual object, such that when the first region of the frame is displayed in a display area and the visual object is displayed in the display area at the determined position the visual object will appear within the insertion zone.

In some examples, each frame of the video data further comprises a second region that encodes blend information, the blend information being indicative of one or more levels of blending to be applied between image content of the insertion zone and the visual object to be positioned in the insertion zone.

In some examples, the method further comprises transmitting, for each frame, processing data comprising at least one image processing parameter suitable for applying to the visual object.

In some examples, the method further comprises receiving a request from the electronic device over the network, and transmitting the video data, the position data and optionally the processing data in response to the request.

According to a third aspect of the present disclosure, there is provided a computer implemented method comprising: obtaining source video material comprising a plurality of source images, each source image comprising an insertion zone that is suitable for insertion of a visual object; generating video data based on the source images, the video data comprising a plurality of frames, wherein each frame has a first region including a respective source image of the source video material and a respective insertion zone; and

generating, for each frame of the video data, position data indicative of a position of the insertion zone in the first region of the frame.

In some examples, the method further comprises: for each source image, generating a matte image that encodes blend information, the blend information being indicative of one or more levels of blending to be applied between image content of the insertion zone in the source image and a visual object; and generating the video data further based on the matte images, wherein each frame of the video data has a second region comprising a respective matte image.

In some examples, the method further comprises generating image content in each of the insertion zones.

In some examples, the method further comprises generating, for each frame of the video data, processing data comprising at least one image processing parameter suitable for applying to a visual object such that the visual object appears visually incorporated with the source video material when displaying a source image of the source video material and the visual object in the insertion zone of the source image.

In some examples, the method comprises: obtaining a plurality of source videos, each source video comprising a plurality of source images, each source image comprising an insertion zone that is suitable for insertion of a visual object; for each source video generating video data based on the source images, the video data comprising a plurality of frames, wherein each frame has a first region including a respective source image of the source video material and a respective insertion zone; for each video data generating, for each frame of the video data, position data indicative of a position of the insertion zone in the first region of the frame; concatenating or appending the video data into the same video.

According to further aspects of the present disclosure, there is provided a computer-readable medium comprising computer executable instructions stored thereon, which when executed by a computing device cause the computing device to perform the method according to any of the first, second or third aspects.

In some examples, the computer-readable medium is non-transitory.

According to further aspects of the present disclosure, there is provided an electronic device configured to perform the method of any of the first, second or third aspects.

## BRIEF DESCRIPTION OF THE DRAWINGS

Examples of the present disclosure are now described with reference to the accompanying drawings, in which:

Figures 1A-1C illustrate frames of source video material according to an example of the present disclosure;

Figure 2 shows a visual object (or embed) according to an example of the present disclosure, which is to be visually inserted into source video material;

Figure 3 shows a method of visually incorporating a visual object with source video material, according to an example of the present disclosure;

Figures 4A-4C illustrate frames of video data according to an example of the present disclosure, which are used in the method of Figure 3;

Figures 5A-5C illustrate a result of visually incorporating the visual object with the source video material, according to an example of the present disclosure;

Figure 6 illustrates a frame of video data according to another example;

Figure 7A illustrates a frame of video data according to another example;

Figure 7B illustrates the result of visually incorporating a visual object with a source image based on the frame in Figure 7A;

Figure 8 illustrates an example method in accordance with an example of the present disclosure;

Figure 9 shows an electronic device that may be used to perform any of the example methods of the present disclosure.

## DETAILED DESCRIPTION

Digital object insertion techniques can enable a (visual) digital object to be inserted into video footage after the video footage has already been captured. Such techniques can enhance the visual effects of the video, or improve the realism of a video, or allow more flexibility in determining the visual content for the video after it has already been shot or captured. For example, video footage of a scene may be captured which includes a TV screen in the scene. However, at the time of capturing the video footage, the TV screen may have been turned off, or its content did not correspond to what was eventually desired in the final video product. Digital object insertion techniques can be used to insert a digital object or embed, such as a video or an image, onto the TV screen in the video footage, so that the TV screen appears as though it is displaying the digital object in the video footage.

It is desirable to be able to quickly and efficiently test or demo different visual objects in combination with the video footage. However, digital object insertion is usually performed by specialists who use complicated and expensive software, which is usually run on powerful and expensive computers. This makes it difficult to test different visual objects using simple and less expensive hardware, such as relatively cheap desktop computers, laptops, tablets or mobile phones. As such, there is a need to perform digital object insertion using simple and less expensive hardware, in a more time efficient manner.

The inventors have recognised that one way of performing digital object insertion is to use a web browser. The web browser may display source video material on a web page. The source video material incudes an insertion zone for the visual object. The visual object can be displayed and positioned in the insertion zone of the source video material. The source video and the visual object could be processed by applying a stream of matte images to the source video and the visual object. Using the matte images, the pixels in the insertion zone in the source video are blended with the pixels of the visual object so that the visual object appears in the insertion zone. A user can upload different visual objects to test how they appear in combination with the source video material. This would allow digital object insertion to be performed on a variety of computing devices, without requiring a specialist or sophisticated hardware/software. However, performing digital object insertion outside of specialist software presents challenges. One challenge is that, in some computing environments such as in web browsers, it is difficult to synchronise two streams of data. As such, it is difficult to synchronise the source video stream and the stream of matte images, so that the correct matte image is applied to the current frame of the source video currently being displayed. It can also be difficult to synchronise the positioning of the visual object so that the visual object appears in the correct location (i.e. in the insertion zone) at the right time.

In an aspect of the present disclosure, the source video and the matte images are combined into the same video. The source video can be considered as a sequence of source images. Each frame of the video includes a region for a source image, and a region for a corresponding matte image. This means that when the source images are played, e.g. by the web browser, the correct matte image is already present in the same frame as the source image. The correct matte image can therefore be applied to the displayed source image and the visual object, without synchronisation problems. Video data, including the source video and matte images, corresponds to pixel-based data.

A unique ID (e.g. frame number) may also be encoded in each frame of the video. Position data which indicates the position (e.g. location, shape and/or size) of the insertion zones may be indexed by the frame numbers. When a source image from the video is displayed, the current frame number can therefore be determined live, e.g. in real time, by decoding the frame number from the current frame of the video. The position data corresponding to the decoded frame number can be found and used in real-time in order to position the visual object in the insertion zone for the current source image on display. Position data and other non-video data may not be pixel-based data, and may instead be, e.g., text-based data.

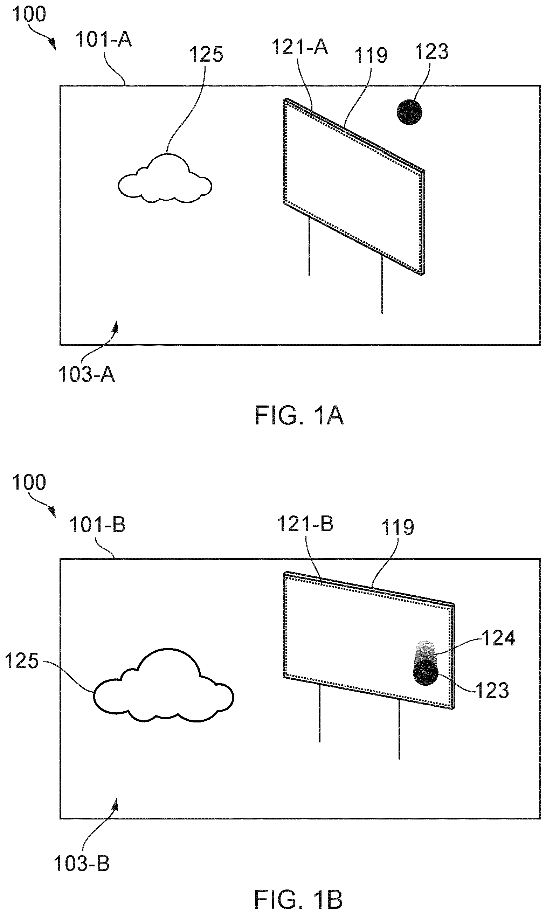

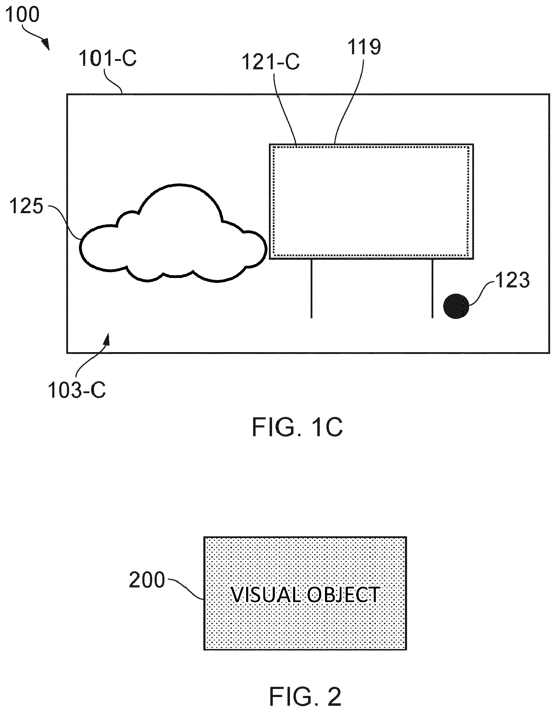

Figures 1A-1C illustrate respective frames 101-A, 101-B and 101-C of source video material 100, according to an example of the present disclosure. Each frame 101-A, 101-B, 101-C of the source video material 100 is made up of a plurality of pixels, which forms a respective source image 103-A, 103-B, 103-C. The frames 101-A, 101-B and 101-C of the source video material 100 may be considered as the source images 103-A, 103-B, 103-C, and therefore the frames 101-A, 101-B and 101-C of the source video material 100 and the source images 103-A, 103-B, 103-C are referred to interchangeably.

Each frame 101-A, 101-B, 101-C of the source video material 100 has a frame size of a particular width of pixels $x_{MAX}$ in the horizontal direction and a particular height of pixels $y_{MAX}$ in the vertical direction. Each frame 101-A, 101-B, 101-C therefore has the same frame size. Each frame 101-A, 101-B, 101-C can be considered as a grid of pixels having a coordinate system $[0, x_{MAX}]$, $[0, y_{MAX}]$, such that individual pixels of a respective source image can be identified by a pair of coordinates $(x_i, y_j)$. The pixel coordinates range from 0 to $x_{MAX}$ in the horizontal direction and 0 to $y_{MAX}$ in the vertical direction. As will be understood in the art, in order to play or view the source video material 100, the frames or source images are sequentially displayed at a frame rate of the source video material 100.

Each frame 101-A, 101-B, 101-C includes a respective insertion zone 121-A, 121-B, 121-C. Each insertion zone corresponds to a region within the respective frame, where a visual object is to be displayed. In this example, each frame 101-A, 101-B, 101-C includes an electronic billboard 119. In each frame 101-A, 101-B, 101-C, the respective insertion zone 121-A, 121-B, 121-C corresponds to the screen of the electronic billboard 119. More particularly, in a given frame 101-A, 101-B or 101-C, the position (e.g. location, shape and size) of the insertion zone 121-A, 121-B, or 121-C corresponds to a position (location, shape and size) of the screen of the electronic billboard 119 in the frame. The electronic billboard 119 can be considered as a host object for the insertion zones.

An example visual object 200 is illustrated in Figure 2. In this example, the visual object 200 is an image made of a plurality of pixels. It is desirable to display the visual object 200 with each frame 101-A, 101-B, 101-C of the source video material 100, so that the visual object 200 appears as though it is part of the originally captured source video material 100. In particular, for the source video material 100, it is desirable to display the visual object 200 with each frame of the source video material 100 so that the visual object 200 appears as though it is being displayed in the insertion zone (and therefore on the screen of the electronic billboard 119) in that respective frame.

There are obstacles to making the visual object 200 appear to be realistically part of the source video material 100. One obstacle is that the angle and position of the camera may not have been fixed when the source video material 100 was captured. In other words, the camera may not have been "locked off". This means that the positions (e.g. locations, sizes and/or shapes) of the insertion zones differ in each of the frames 101-A, 101-B and 101-C. For example, in the frame 101-A of the source video material 100, the camera angle and position is such that the electronic billboard 119, and therefore the insertion zone 121-A, is being viewed from an angle. Then, through the frames 101-B and 101-C, the camera angle and position changes such that the camera pans to face the electronic billboard 119 from the front. Consequently, as shown in Figures 1A-1C, the position of the screen of the electronic billboard 119 changes. As such, the positions of the insertion zones change. Therefore, it is desirable to determine an appropriate position for the visual object 200 for each of the frames 101-A, 101-B and 101-C, so that the visual object 200 consistently appears inside the insertion zones, and therefore in the screen area of the electronic billboard 119, in each of the frames.

Another obstacle is the presence of foreground objects in the source video material. In the source video material 100, each frame 101-A, 101-B, 101-C includes a ball 123, which may be considered as a foreground object. In the frame 101-A, the ball is above the insertion zone 121-A and the electronic billboard 119, and therefore outside of the area or region of the insertion zone 121-A. However, in the frame 101-B, the ball 121 falls in front of the insertion zone 121-B. Part of the insertion zone 121-B is therefore occluded by the ball 123. Part of the insertion zone 121-B is also occluded by a motion blur 124 of the ball 123 captured in the original source video material 100. In the frame 101-C, the ball 123 falls to the ground and is therefore outside of the insertion zone 121-C. In order for the visual object 200 to realistically appear on the screen of the electronic billboard 119, the visual object 200 should be occluded by the ball 123 and at least partially occluded by the motion blur 124 when the frame 101-B is being displayed.

Another obstacle is that there may be a need to display visual effects on the screen of the billboard 119 and therefore in the insertion zones. Displaying visual effects in the insertion zones can help to enhance the realistic appearance of the visual object 200 in the insertion zones. One example visual effect is a reflection effect. As shown in Figures 1A-1C, each frame 101-A, 101-B, 101-C includes the cloud 125 positioned in front of the screen of the billboard 119. Therefore, in order for the visual object 200 to realistically appear as part of the source video material 100 (i.e. on the screen of the billboard 119), it may be desired to also display a reflection of the cloud 125 in the insertion zones simultaneously with the visual object 200. Another example visual effect is a shadow effect. In order for the visual object 200 to realistically appear as part of the source video material 100, it may be desired to also display a shadow of the cloud in the insertion zones simultaneously with the visual object 200. It may be desired to also apply other visual effects to the visual object 200 so that it realistically appears on the screen of the billboard 119 and part of the original source video material 100, such as a colour correction effect, blur effect, grain effect, etc.

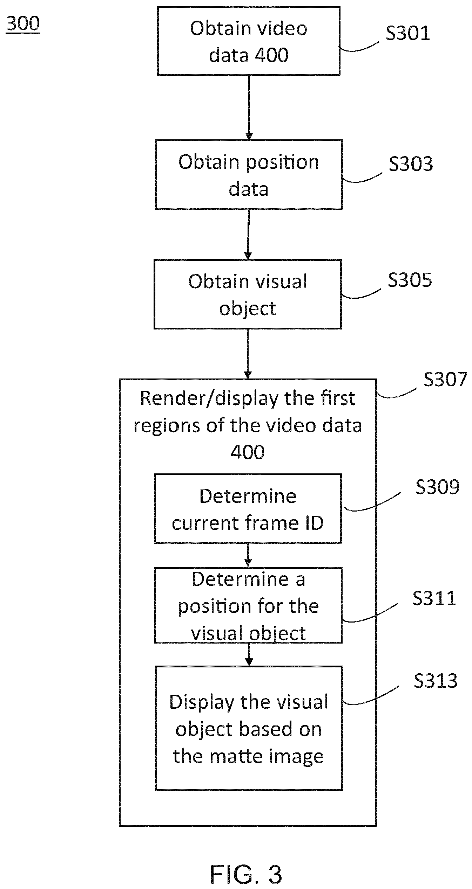

Figure 3 illustrates a computer implemented method 300 of visually incorporating the visual object 200 with the source video material 100. In particular, the method 300 displays the source video material 100 and the visual object 200, so that the visual object 200 appears visually incorporated within source video material 100. The frames or source images 103-A, 103-B, 103-C of the source video material 100 are successively displayed at a frame rate, e.g. of the source video material 100. The visual object 200 is displayed simultaneously with each source image, in the respective insertion zone of the source image currently being displayed. As described below, using the method 300, the visual object 200 can appear realistically visually incorporated with each frame of the source video material 100. The method 300 may be implemented performed by an electronic device. In some examples, the method 300 may be performed in a web browser hosted by the electronic device.

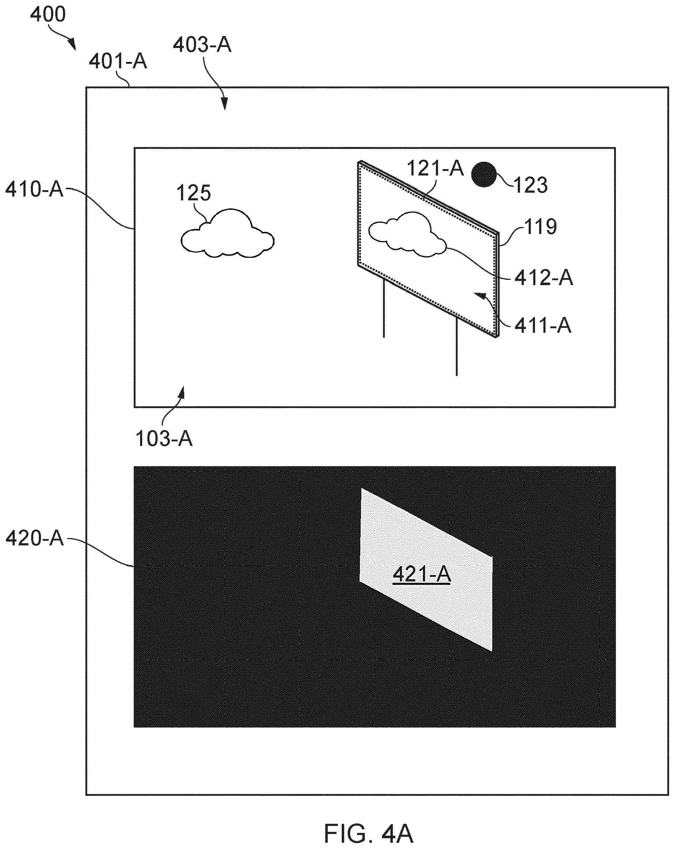

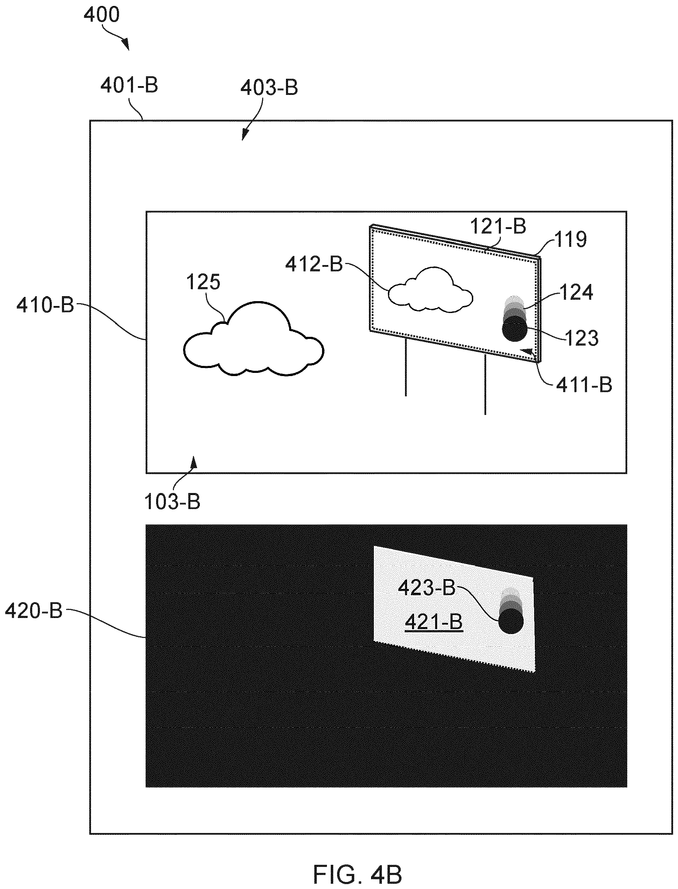

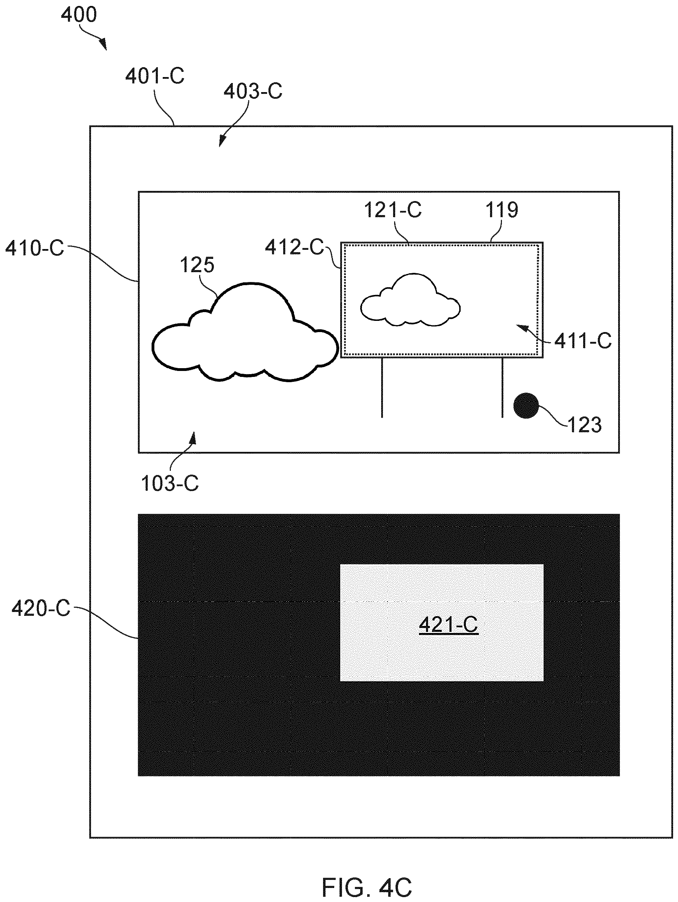

At step S301, with reference to Figures 4A-4C, video data 400 is obtained. The video data 400 can be received over a network, or can be loaded from a data storage medium. The video data 400 includes a frame 401-A shown in Figure 4A, a frame 401-B shown in Figure 4B, and a frame 401-C shown in Figure 4C. The number of frames of the video data 400 correspond to the number of frames of the source video material 100, which is three frames in the present example. Each frame 401-A, 401-B, 401-C includes respective image content 403-A, 403-B, 403-C. Each frame 401-A, 401-B, 401-C is made up of a plurality of pixels, which forms the respective image content 403-A, 403-B, 403-C. Each frame 401-A, 401-B, 401-C is associated with a unique frame number or frame ID. The frame 401-A is associated with a frame ID F1. The frame 401-B is associated with a frame ID F2. The frame 401-C is associated with a frame ID F3.

With reference to Figure 4A, the frame 401-A includes a first region 410-A of pixels. The first region 410-A includes the source image content 103-A of the first frame 101-A of the source video material 100. As such, the first region 410-A includes the insertion zone 121-A. Similarly, the frame 401-B includes a first region 410-B that includes the image content 103-B of the frame 101-B of the source video material 100 and therefore the insertion zone 121-B. The frame 401-C includes a first region 410-C that includes the image content 103-C of the frame 101-C of the source video material 100 and therefore the insertion zone 121-C. The size of each of the first regions 410-A, 410-B, 410-C corresponds to the frame size of the source video material 100. As such, each first region 410-A, 410-B, 410-C has a width $x_{MAX}$ pixels in the horizontal direction and a height $y_{MAX}$ pixels in the vertical direction. Each first region 410-A,

410-B, 410-C can be considered as a grid of pixels having a coordinate system [0, $x_{MAX}$], [0, $y_{MAX}$], such that individual pixels of a respective first region can be identified by a pair of coordinates ($x_i$, $y_j$). The pixel coordinates range from 0 to $x_{MAX}$ in the horizontal direction and 0 to $y_{MAX}$ in the vertical direction.

The frame 401-A further includes image content 411-A in the insertion zone 121-A (and therefore in the first region 410-A). The image content 411-A includes a visual effect that is to be displayed in the insertion zone 121-A with the visual object 200. In particular, the image content 411-A in the insertion zone 121-A includes a reflection 412-A of the cloud 125. Similarly, the frames 401-B, 401-C include respective image content 411-B, 411-C in the respective insertion zones 121-B, 121-C. The image content 411-B, 411-C includes respective reflections 412-B, 412-C of the cloud 125. In some examples, the reflections 412-A, 412-B, 412-C are present in the original source video material 100. In other examples, the reflections 412-A, 412-B, 412-C may not have been captured in the filming of the source video material 100, and therefore the reflections may be incorporated into the insertion zones after capturing the source video material 100 as an effect, prior to obtaining the video data 400 at step S301. As shown in Figures 4A-4C, the position of the cloud reflections may change between the frames of the video data 400, in order to maintain realism of the reflection as the camera angle and position changes between the frames. The reflections can be incorporated into the insertion zones based on any technique known in the art. For example, known compositing/effects software and compositing/effects techniques can be used. Furthermore, it is noted that in the frame 401-B, the ball 123 falls in front of the insertion zone 121-B, and occludes part of the insertion zone 121-B. Therefore the image content 411-B for the frame 401-B also includes the ball 123 and the motion blur 124. In some examples, the image content of one or more of the frames 401-A, 401-B, 401-C may include a shadow of the cloud 125 (not shown). The shadow may have a darker colour in comparison to the reflection. The shadows may be already present in the original source video material 100, or may be incorporated into the insertion zones after capturing the source video material 100 as an effect, as described above for the reflections.

With reference to Figure 4A again, the frame 401-A also includes a second region 420-A of pixels. The second region 420-A is different to the first region 410-A. As illustrated in the figure, the second region 420-A does not overlap with the first region 410-A. Rather, the second region 420-A is separate from the first region 410-A. Similarly, the frame 401-B includes a second region 420-B of pixels and the frame 401-C includes a second region 420-C of pixels.

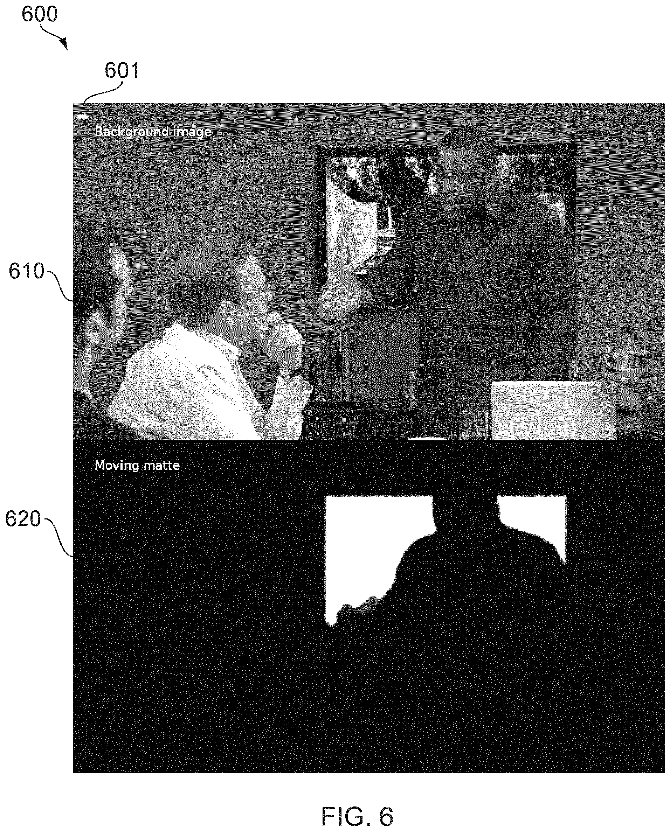

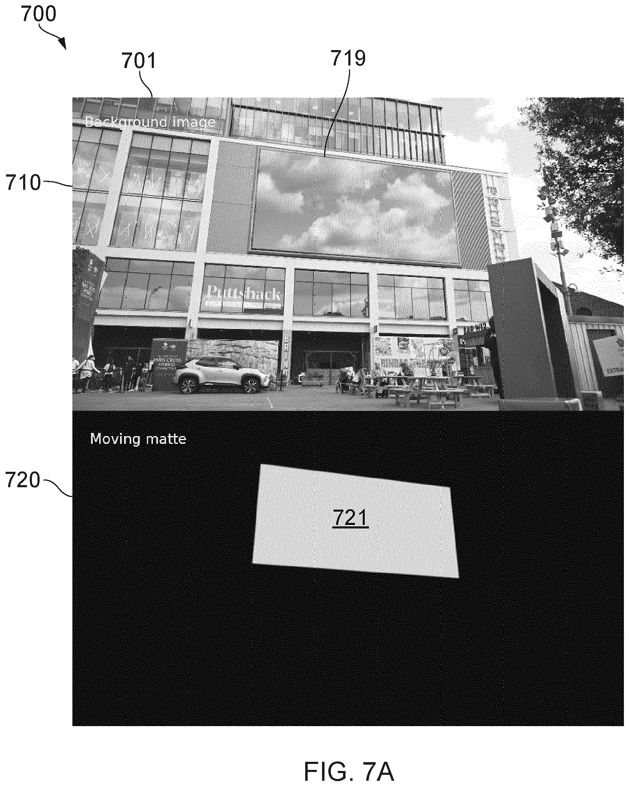

The size of each of the second regions 420-A, 420-B, 420-C correspond to the frame size of the source video material 100 / first regions. As such, each second region 420-A, 420-B, 420-C has a width $x_{MAX}$ pixels in the horizontal direction and a height $y_{MAX}$ pixels in the vertical direction. Each second region 420-A, 420-B, 420-C can be considered as a grid of pixels having a coordinate system [0, $x_{MAX}$], [0, $y_{MAX}$], such that individual pixels of a respective second region can be identified by a pair of coordinates ($x_i$, $y_j$). The pixel coordinates range from 0 to $x_{MAX}$ in the horizontal direction and 0 to $y_{MAX}$ in the vertical direction. As such, for each pixel located in a second region (e.g. 420-A), there is a correspondingly located pixel in the first region (e.g. 410-A). As a minimum size of the each frame 401-A, 401-B, 401-C, the frame has a height that is double the height (e.g. $2y_{max}$) of the frame size, and has the same width (e.g. $x_{max}$) as the frame size (e.g. see Figures 6 and 7A).

Each second region 420-A, 420-B, 420-C may be referred to as a matte image. In the present example, each matte image 420-A, 420-B, 420-C is a grayscale image. In particular, the pixels in each matte image have a value corresponding to a minimum value, a maximum value, or a value in between the minimum and maximum value. If the pixel has the minimum value (e.g. 0, or 0%), then the pixel is represented as black. If the pixel has the maximum value (e.g. 100, or 100%) then the pixel is represented as white. If the pixel has a value in between the maximum or minimum value, then the pixel is represented by a shade of grey. The shade of grey is dependent on how close or far the value is from the minimum and maximum values. For example, a pixel value closer to the maximum value (100%) may be a relatively lighter shade of grey. A pixel value closer to the minimum value (0%) may be a relatively darker shade of grey.

The matte image 420-A encodes blend information. The matte image 420-A of the frame 401-A indicates an amount or level of blending to be applied between pixels of the insertion zone 121-A in the respective first region 410-A, and pixels of the visual object 200. As shown in Figure 4A, the matte image 420-A includes an area 421-A of pixels. The locations or coordinates of the pixels in the area 421-A correspond to the locations or coordinates of the pixels in the insertion zone 121-A in the first region 410-A. Therefore, the position (e.g. location, size and shape) of the area 421-A in the matte image 420-A corresponds to the position of the insertion zone 121-A in the first region 410-A. The pixel value of each pixel in the area 421-A represents or encodes an amount or level of blending to be applied between a corresponding pixel in the insertion zone 121-A, and a corresponding pixel of the visual object 200.

In general, if a pixel ($x_i$, $y_j$) in the area 421-A has a pixel value of *n%,* then this indicates that a correspondingly located pixel ($x_i$, $y_j$) in insertion zone 121-A is to be blended with a corresponding pixel of the visual object 200 at a level of *n%.* The result will be a pixel that is a blend or mixture of the pixel of the visual object 200 and the pixel in the insertion zone 121-A. The level *n%* indicates the resulting visual strength of the pixel of the visual object 200. The level *n%* may also indicate the level of transparency of the pixel of the insertion zone 121-A in the result. A pixel value *n%* that is closer to the maximum value (i.e. 100%, a lighter shade of grey) indicates that the pixel of the visual object 200 should be relatively more blended with the pixel in the insertion zone 121-A (i.e. the pixel of the visual object 200 should have a greater visual strength or the pixel in the insertion zone 121-A should appear more transparent). A pixel value *n%* that is closer to the minimum value (i.e. 0%, a darker shade of grey) indicates that the pixel of the visual object 200 should be relatively less blended with the pixel in the insertion zone 121-A (i.e. the pixel of the visual object 200 should have a weaker visual strength or the pixel in the insertion zone 121-A should appear less transparent). If the pixel value is the maximum pixel value (i.e. 100%, a white pixel), this indicates that the pixel in the insertion zone 121-A should be maximally blended with the pixel of the visual object 200, so that the pixel of the visual object 200 appears entirely opaque/visible and the pixel in the insertion zone 121-A is not visible (i.e. 100% transparent). In other words, the pixel in the insertion zone 121-A is entirely replaced by the pixel of the visual object 200. If the pixel value is the minimum pixel value (i.e. 0%, a black pixel) this indicates that the pixel in the insertion zone 121-A should be minimally blended with the pixel of the visual object 200, so that the pixel of the visual object 200 is not visible and the pixel in the insertion zone 121-A appears entirely visible or opaque. In other words, the pixel in the insertion zone 121-A is not blended and remains the visible.

It will be appreciated that any suitable blending or compositing algorithm may be used to blend two pixels. For example, any suitable alpha compositing technique may be used. A linear alpha compositing algorithm may be used as follows:

$$\text{blended pixel} = (1\text{-alpha})*\text{pixel1} + \text{alpha}*\text{pixel2},$$

wherein pixel1 may be a pixel of the first region, pixel2 may be a correspondingly located pixel of the visual object, and alpha corresponds to a pixel value $n\%$ of a correspondingly located pixel of the matte image, normalised between 0 and 1. However, any other alpha compositing algorithm may be used, including: overlap, burn, screen, luminance, multiply, divide, add, overlap, light, dodge, etc. In some examples, blending the pixel of the matte image 420-A and the pixel of the visual object 200 at a level of $n\%$ may involve performing a weighted average between the pixel of the matte image 420-A and the pixel of the visual object 200, the weight being $n\%$.

In the matte image 420-A, the pixels in the area 421-A have an 85% pixel value, and are therefore a relatively light shade of grey. The coordinates of the pixels in the area 421-A of the second region 420-A correspond to the coordinates of the pixels of the insertion zone 121-A in the first region 420-A. An 85% pixel value indicates that the image content 411-A of the insertion zone 121-A and the visual object 200 are to be blended at a level of 85%. This means that when the pixels of the visual object 200 are blended with the pixels of the insertion zone 121-A based on the matte image 420-A, the visual object 200 will have a relatively greater visual strength (e.g. 85% visual strength). The image content 411-A of the insertion zone 121-A will also be visible in the insertion zone 121-A but with a relatively weaker visual strength ( e.g. with a 15% visual strength). Consequently, the cloud reflection 412-A will appear partially visible, thereby giving the combination of the first region 410-A and the visual object 200 a more realistic appearance. If the image content 411-A contains a shadow (e.g. of the cloud 125), then the shadow will also appear partially visible in the insertion zone 121-A. Meanwhile, the remainder of the first region 410-A is to remain entirely visible. As such, the pixels of the matte image 420-A outside of the area 421-A can have a 0% pixel value (black).

Each of the second regions 420-B and 420-C also encode blend information and have respective areas 421-B and 421-C of pixels similar to the area 421-A of pixels of second region 420-A. Therefore their general description is not repeated.

The coordinates of the pixels in the area 421-B of the second region 420-B correspond to the coordinates of the pixels of the insertion zone 121-B in the first region 420-B. Similarly to the area 421-A, most of the pixels in the area 421-B have an 85% pixel value, and are therefore a relatively light shade of grey. However, the area 421-B also includes an occlusion 423-B. The locations of the pixels in the occlusion 423-B correspond to the locations of the pixels of the ball 123 and the motion blur 124 in the first region 410-B. The occlusion 423-B includes a region of pixels that have a 0% (black) pixel value, and the locations of those pixels correspond to the locations of the pixels of the ball 123 in the first region 410-B. The occlusion 423-B also includes a region of pixels having pixel values of varying between 0% and 85% at the location of the pixels of the motion blur 124. This means that when the pixels of the visual object 200 are blended with the pixels of the insertion zone 121-B based on the matte image 420-B, the visual object 200 will have a relatively greater (85%) visual strength for most pixels of the insertion zone 121-B. However, due to the occlusion 423-B, the ball 123 will remain entirely visible with 100% visual strength. At the location of the ball 123, the pixels of the visual object 200 will have 0% visual strength and not be visible. Furthermore, the pixels of the motion blur 124 will have varying levels of non-zero visual strength. Consequently, the visual object 200 will appear blended with the cloud reflection 412-B, and the cloud reflection 412-B will appear visible. If the image content 411-B contains a shadow (e.g. of the cloud 125), then the shadow will also appear partially visible in the insertion zone 121-B. However, the ball 123 part of the image content 411-B will appear as a foreground object in front of the visual object 200, because the pixels of the ball 123 remain unblended, thereby giving the combination of the first region 410-B and the visual object 200 a more realistic appearance. Moreover, the motion blur 124 also remains visible, which also enhances the realism. Meanwhile, the remainder of the first region 410-B is to remain entirely visible. As such, the pixels of the matte image 420-B outside of the area 421-B can have a 0% pixel value (black).

The coordinates of the pixels in the area 421-C correspond to the coordinates of the pixels of the insertion zone 121-C in the first region 420-C. In the area 421-C of the matte image 420-C, like the area 420-A of the matte image 420-A, all of the pixels in the area 421-C have an 85% pixel value, and are therefore a relatively light shade of grey. The occlusion 423-B in the matte image 420-B is no longer present. As such, when the pixels of the visual object 200 are blended with the pixels of the insertion zone 121-C, the blend between the visual object 200 and the image content 411-C will appear unobstructed. Moreover, the cloud reflection 412-C will appear partially visible, thereby giving the combination of the first region 410-C and the visual object 200 a more realistic appearance. If the image content 411-C contains a shadow (e.g. of the cloud 125), then the shadow will also appear partially visible in the insertion zone 121-C. Meanwhile, the remainder of the first region 410-C are to remain entirely visible. As such, the pixels of the matte image 420-C outside of the area 421-C can have a 0% pixel value (black).

Although not shown in the Figures, each frame of the video data 400 encodes its respective frame ID. In particular, the frame 401-A encodes the frame ID F1 in it's image content 403-A. The frame 401-B encodes the frame ID F2 in it's image content 403-B. The frame 401-C encodes the frame ID F3 in it's image content 403-C. Preferably, each frame 401-A, 401-B, 401-C has a third region of pixels different to or separate from the first region 410-A/410-B/410-C and the second region 420-A/420-B/420-C. The frame IDs are encoded (e.g. binary coded) based on the pixel values of the pixels in the third region.

It will be appreciated that the matte images 420-A, 420-B, 420-C can be generated and combined with the respective source images 103-A, 103-B, 103-C to form the frames 401-A, 401-B, 401-C, and the frame IDs can be encoded in the frames 401-A, 401-B, 401-C, using any technique known in the art. For example, known compositing software and compositing techniques can be used.

At step S303 of the method 300, a set of position data is obtained. In particular, position data is obtained for each frame 401-A, 401-B, 401-C. First position data is obtained for the frame 401-A which indicates the position (e.g. size, shape, and/or location) of the insertion zone 121-A in the first region 410-A. Second position data is obtained for the frame 401-B which indicates the position of the insertion zone 121-B in the first region 410-B. Third position data is obtained for the frame 401-C which indicates the position of the insertion zone 121-C in the first region 410-C. The first position data is associated with the frame ID F1 of the frame 401-A. The second position data is associated with the frame ID F2 of the frame 401-B. The third position data is associated with the frame ID F3 of the frame 401-C. Each position data enables the position of insertion zone in the respective first region to be determined. When the visual object is displayed based on the position data, the position data enables the visual object to appear the insertion zone of the first region of the respective frame.

In some examples, each position data includes pixel coordinates that are suitable for determining the position (e.g. location, shape and/or size) of the respective insertion zone. In some examples, the pixel coordinates correspond to the vertices of the respective insertion zone. The pixel coordinates may be normalised to the same coordinate system $[0, x_{MAX}]$, $[0, y_{MAX}]$ of the first regions, so that the insertion zones can be readily located in the first regions.

In some examples, each position data additionally or alternatively includes information indicative of a transformation (i.e. transformation information) to be applied to the visual object, so that the visual object will appear within the insertion zone of the respective frame e.g. when the visual object is displayed at the location of the insertion zone. The transformation can include a rotation and a translation. The transformation can therefore include a rotation parameter (e.g. rotation matrix) that is to be applied to the visual object, and a translation parameter (e.g. translation vector) that is to be applied to the visual object. The rotation and translation parameters may be indicative of the rotation and translation of the insertion zone in the first region of the respective frame. As such, when the position data, and therefore the transformation information, is applied to the visual object, the visual object will fit in the insertion zone.

In some examples, the transformation information additionally or alternative includes one or more of a projected position parameter, a scaling parameter, and one or more camera parameters. The camera parameters can include one or more of a focal distance of the camera at the time of capturing the respective frame of source video material, a principle point of the camera, and rotation and translation parameters for the camera.

One way of representing the transformation achieved by the above parameters is by the equation:

$$\begin{pmatrix} x \\ 1 \end{pmatrix} x = l(K \quad 0) \begin{pmatrix} R_M & T_M \\ 0 & 1 \end{pmatrix} \begin{pmatrix} R_P & T_P \\ 0 & 1 \end{pmatrix} \begin{pmatrix} s & 0 \\ 0 & 1 \end{pmatrix} \begin{pmatrix} X \\ 1 \end{pmatrix},$$

where

$$K = \begin{pmatrix} f_x & 0 & x_0 \\ 0 & f_y & y_0 \\ 0 & 0 & 1 \end{pmatrix}$$

$x$ is the 3D projected image position of a 3D point or position $X$. $l$ is a scaling factor. $K$ is a 3x3 camera matrix defining the focal distance and principal point coordinates. $f_x$, $f_y$ represent the focal distance of the camera measured in x and y pixel coordinates respectively. $x_0$, $y_0$ represent the principal point of the camera in x and y pixel coordinates. $R_M$, $T_M$ are the rotation matrix and translation vector defining the motion of the camera in 3D space. $R_M$, $T_M$ are the rotation matrix and translation vector defining the motion of the object in 3D space. $s$ is a scale factor to apply to the coordinates $X$.

In some examples, the set of position data is contained in a file, such as a JSON file. The JSON file may index each position data by the corresponding frame ID, and/or order the set of position data by consecutive frame IDs. The set of position data can be received over a network, or loaded from a computer readable storage medium.

At step S305, the visual object 200 is obtained. The visual object 200 can be received over a network. The visual object 200 can also be loaded from a computer readable storage medium.

Next, the image content of the first regions 410-A, 410-B, 410-C are played (e.g. displayed) whilst simultaneously displaying the visual object 200, as follows.

At step S307, each of the first regions 410-A, 410-B, 410-C are rendered and displayed. The first regions are displayed sequentially at the frame rate. The image content of the first regions 410-A, 410-B, 410-C of the video data 400 are rendered and displayed, which includes the respective source images 103-A, 103-B, 103-C and the content 411-A, 411-B, 411-C. The remainder of the image content 403-A, 403-B, 403-C of the frames 401-A, 401-B, 401-C is hidden from the display or not displayed (e.g. the second regions and the third regions of the frames are not displayed). The first regions 410-A, 410-B, 410-C are displayed at the frame rate. The first regions 410-A, 410-B, 410-C are displayed in a display area. The display area has a width of pixels $x_{MAX}$ and a height of pixels $y_{MAX}$. As such, the display area corresponds to the size of the first regions, and therefore the frame size and/or the size of the coordinate system [0, $x_{MAX}$], [0, $y_{MAX}$].

Steps S309, S311 and S313 are performed whilst the first regions 410-A, 410-B, 410-C are being rendered and/or displayed. At a given instance in time, a first region of a current frame 401-A, 401-B, or 401-C is being rendered and/or displayed. At step S309, the frame ID of the current frame is determined. In particular, the frame ID is decoded from the third region of the current frame. If the first region 410-A is currently being rendered/ displayed, then the frame ID F1 is decoded from the third region of the frame 401-A. If the first region 410-B is currently being rendered/ displayed, then the frame ID F2 is decoded from the third region of the frame 401-B. If the first region 410-C is currently being rendered/ displayed, then the frame ID F3 is decoded from the third region of the frame 401-C.

At step S311, a position for the visual object in the display area is determined. The position for the visual object is determined based on the position data that is associated with the determined frame ID. If the frame ID F1 is determined, then the position for the visual object is determined based on the position data that is associated with the frame ID F1. In this case the position for the visual object will therefore correspond to the position of the insertion zone 121-A in the first region 410-A of the frame 401-A. If the frame ID F2 is determined, then the position for the visual object is determined based on the position data that is associated with the frame ID F2. In this case the position for the visual object will correspond to the position of the insertion zone 121-B in the first region 410-B of the frame 401-B. If the frame ID F3 is determined, then the position for the visual object is determined based on the position data that is associated with the frame ID F3. In this case the position for the visual object will correspond to the position of the insertion zone 121-C in the first region 410-C of the frame 401-C. In some examples, if the position data is stored in a JSON file, then the position data corresponding to the determined frame ID can be read from the JSON file.

At step S313, the visual object 200 is displayed in the display area. The visual object 200 is displayed in the display area simultaneously with the first region of the current frame. The visual object 200 is displayed based on or at the position determined in step S311. As such, if the frame 401-A is the current frame (the first region 410-A is being rendered/displayed), then the visual object 200 will appear in the insertion zone 121-A. If the frame 401-B is the current frame (the first region 410-B is being rendered/displayed), then the visual object 200 will appear in the insertion zone 121-B. If the frame 401-C is the current frame (the first region 410-C is being rendered/displayed), then the visual object 200 will appear in the insertion zone 121-C. Positioning the visual object 200 according to the determined position may include shaping, sizing and/or transforming the visual object 200 accordingly to fit into the insertion zone of the current frame. Consequently, the position (e.g. location, shape and/or size) of the visual object 200 will correspond to the position of the insertion zone. For example, if the position data comprises pixel coordinates of the vertices of the insertion zone, then the visual object 200 may be shaped or resized so that the pixel coordinates of the vertices of the visual object 200 match the pixel coordinates of the vertices of the insertion zone. If the position data includes transformation information (e.g. rotation, translation, or other parameters), then the visual object 200 may be accordingly transformed (e.g. rotated, translated, or otherwise processed) to appear the same shape as the insertion zone.

Further at step S313, the visual object 200 is displayed in the display area based on the matte image of the current frame. In particular, the image content of the insertion zone is blended with the visual object based on the blend information that is encoded in the matte image of the current frame. If the frame 401-A is the current frame (the first region 410-A is being rendered/displayed), then the image content 411-A the insertion zone 121-A is blended with the visual object 200 based on the blend information encoded in the matte image 420-A. If the frame 401-B is the current frame (the first region 410-B is being rendered/displayed), then the image content 411-B the insertion zone 121-B is blended with the visual object 200 based on the blend information encoded in the matte image 420-B. If the frame 401-C is the current frame (the first region 410-C is being rendered/displayed), then the image content 411-C the insertion zone 121-C is blended with the visual object 200 based on the blend information encoded in the matte image 420-C.

As discussed above, for each pixel in the insertion zone of the current frame, the matte image of the current frame includes a pixel that encodes a level of blending to be applied between that pixel of the insertion zone and a correspondingly located pixel of the visual object 200. For each pixel of the insertion zone, the pixel value of the corresponding pixel of the matte image is determined. An amount or level of blending is then applied between the pixel of the insertion zone and the corresponding pixel of the visual object 200, based on the determined pixel value. If the determined pixel value is the minimum value (0%), then the pixel of the insertion zone is maintained as opaque (100% visual strength) and the corresponding pixel of the visual object 200 is not visible. If the pixel value is greater than the minimum value, then a corresponding amount of blending is applied between the pixel of the insertion zone and the corresponding pixel of the visual object 200. At locations where the pixel value is between the minimum and maximum values, both the image content of the insertion zone and the visual object 200 are visible. If the pixel value is the maximum value (100%), then the pixel of the insertion zone is made non-visible (100% transparent or 0% visual strength) and the corresponding pixel of the visual object is made opaque (100% visual strength).

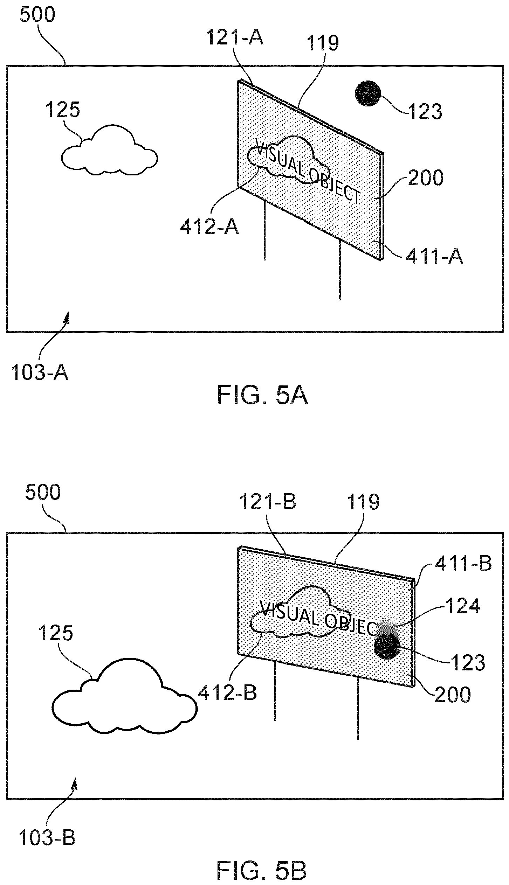

Figure 5A shows the result of steps S307-S313 when the current frame is the frame 401-A (frame ID F1). In particular, Figure 5A shows the display area 500. As shown, the source image 103-A appears in the display area 500, e.g. as a result of step S307. Furthermore, the visual object 200 appears inside the insertion zone 121-A. This is because the visual object 200 is positioned based on the position data corresponding to the insertion zone 121-A of the current frame F1, e.g. as a result of step S311-313. Moreover, the visual object 200 is visible because the pixels of the visual object 200 are blended with the pixels of the insertion zone 121-A at a level of 85%. Therefore the visual object 200 appears blended with the image content 411-A inside the insertion zone 121-A, e.g. as a result of step S313. In particular the visual object 200 appears to have the cloud reflection 412-A. If the image content 411-A contains a shadow (e.g. of the cloud 125), then the shadow will appear cast over the visual object 200. Accordingly, the visual object 200 appears realistically on the screen of the electronic billboard 119, as though the visual object 200 was part of the original source video material 100.

Figure 5B shows the result of steps S307-S313 when the current frame is the frame 401-B (frame ID F2). As shown, the source image 103-B appears in the display area 500. Furthermore, the visual object 200 appears inside the insertion zone 121-B, because the visual object 200 is positioned based on the position data corresponding to the insertion zone 121-B of the current frame F2. Moreover, the visual object 200 is visible because most of the pixels in the insertion zone 121-B are blended with the pixels of the visual object 200 at a level of 85%. Since the insertion zone 121-B is not 100% transparent, the visual object 200 appears blended with the cloud reflection 412-B inside the insertion zone 121-B. However, the ball 123 part of the image content 411-B appears as a foreground object in front of the visual object 200. This is because the pixels 423-B in the matte image 420-B have 0% pixel values. As such, the ball 123 in the image content 411-A of the insertion zone remains fully visible, and the visual object 200 is not visible at the location of the ball 123. This gives the combination of the source video and the visual object 200 a more realistic appearance by taking into account the foreground object 123. Moreover, the motion blur 124 also remains visible, which also enhances the realism. If the image content 411-B contains a shadow (e.g. of the cloud 125), then the shadow will appear cast over the visual object 200. Accordingly, the visual object 200 appears realistically on the screen of the electronic billboard 119, even when foreground objects are present.

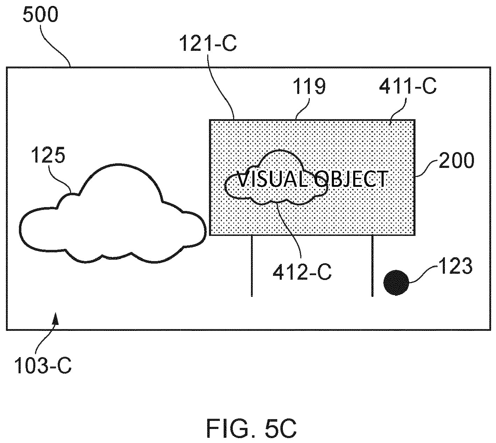

Figure 5C shows the result of steps S307-S313 when the current frame is the frame 401-C (frame ID F3). As shown, the source image 103-C appears in the display area 500. Furthermore, the visual object 200 appears inside the insertion zone 121-C, because the visual object 200 is positioned based on the position data corresponding to the insertion zone 121-C of the current frame F3. Moreover, the visual object 200 is visible because the pixels in the insertion zone 121-C are blended with the pixels of the visual object 200 at a level of 85%. Therefore the visual object 200 appears blended with the image content 411-C inside the insertion zone 121-C. In particular the visual object 200 appears to have the cloud reflection 412-C. If the image content 411-C contains a shadow (e.g. of the cloud 125), then the shadow will appear cast over the visual object 200. Accordingly, the visual object 200 appears realistically on the screen of the electronic billboard 119, as though the visual object 200 was part of the original source video material 100.

Advantageously, the method 300 can be performed without requiring powerful computing hardware, and without requiring expensive computing software. Rather, the method 300 can be performed on a cheap desktop computer, laptop, phone, tablet etc. Moreover, the method 300 can be performed in a web browser environment, and the results shown in Figures 5A-5C can be displayed in a web browser. The method 300 may be implemented using any web software tools and languages known in the art, such as HTML (e.g. HTML5), JavaScript™, CSS and WebGL™.

In some computing environments, including web browser environments, it can be difficult to synchronise the frames of two separate video streams. For example, if the matte images and the source images were parts of two separate video streams or video files, then it would be difficult to know which matte image to apply to which source image at a given point in time. However, the present disclosure combines the matte images with the relevant source image in the same frame of the video data 400. Accordingly, when each frame of the video data 400 is processed by the web browser, it is known which matte image should apply to the current frame of the video data, because the matte image and the source image is in the same frame. Therefore, the present disclosure avoids synchronisation problems between the matte image data and the source images.

In some computing environments, including web browser environments, it can also be difficult to know which frame of a video file is currently being displayed. For example, the first regions of the video data 400 may be displayed via a web video player, in which case it is difficult to determine which frame number is currently being played by the video player at a given point in time. This can make it difficult to know which position data to use to determine the position of the visual object. It is useful to accurately know which frame of the video data 400 is currently being displayed, so that the correct position data can be applied to the visual object 200. Advantageously, the present disclosure encodes the frame ID of each frame in a third region of the frame. The frame ID can then be determined in real time, and the correct position data can be used to position the visual object for the current frame. However, it will be appreciated that it is not always necessary to encode the frame ID in the source images. Rather, in some computing environments, the video player which displays the first regions may output a frame ID corresponding to the current frame. The outputted frame ID can be used to select the correct position data for the current frame.

In some examples, it can be useful to apply effects to the visual object 200 before it is displayed in the display area. The effects can include colour correction effects, blur effects, grain effects etc. Such effects can help the visual object 200 appear to be better visually incorporated into the source video 100.

According to some examples, the method 300 may further comprise obtaining processing data. In particular, processing data is obtained for each frame 401-A, 401-B, 401-C. First processing data is obtained for the frame 401-A. Second processing data is obtained for the frame 401-B. Third processing data is obtained for the frame 401-C. The first processing data is associated with the frame ID F1 of the frame 401-A. The second processing data is associated with the frame ID F2 of the frame 401-B. The third processing data is associated with the frame ID F3 of the frame 401-C. Each processing data includes at least one image processing parameter suitable for applying an effect to the visual object. For example, each processing data can include one or more of: colour correction curve parameters, blur effect parameters, grain effect parameters, etc. The method 300 may further comprise processing the visual object 200 based on the processing data that is associated with the frame ID determined in step S309. This step is preferably performed before the step S313. In order to apply realistic effects to the visual object 200, the image processing parameters may change from frame to frame of the video data 400. Advantageously, by determining the frame ID of the current frame, it is possible to apply the correct parameters to the visual object for the current frame, so that the visual object appears to be more realistically visually incorporated into the source image corresponding to the current frame. The processing data can be stored in and read from the same JSON file as the position data. Alternatively, the processing data can be stored in and read from a different JSON file. The JSON file may index the processing data by the corresponding frame ID.

Figure 6 shows another example of a frame 601 of video data 600 that may be obtained at step S301 of the method 300. As shown, the frame 601 includes a first region 610 corresponding to a source image of a source video, and a second region 620 corresponding to a matte image. The TV screen in the first region 610 corresponds to the insertion zone, and the man in front of the TV screen corresponds to a foreground object. As shown in the matte image 620, the parts of the TV not occluded by the man have white pixels (100% pixel value). The parts of the TV screen occluded by the man have mostly black pixels (0% pixel value). The motion blur of the man's hand is accounted for in the matte image 620 by grey pixels (pixel values in the range 0-100%). Accordingly, when the first region 610 is displayed and the visual object is simultaneously displayed based on the matte image 620, then the visual object will appear realistically occluded by the man.

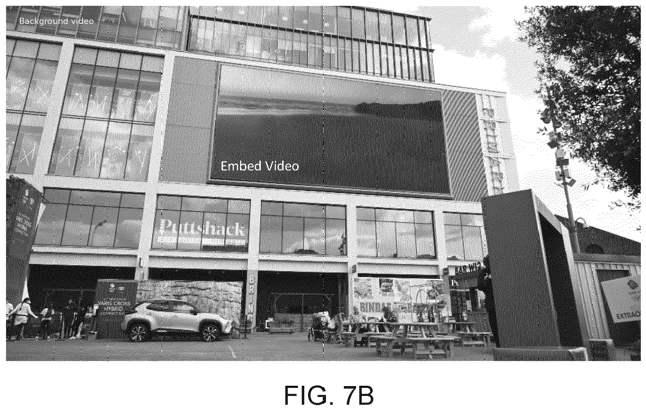

Figure 7A shows another example of a frame 701 of video data 700 that may be obtained at step S301 of the method 300. As shown, the frame 701 includes a first region 710 corresponding to a source image of a source video, and a second region 720 corresponding to a matte image. The electronic billboard screen 719 in the first region 710 corresponds to the insertion zone. The cloud imagery in the billboard screen 719 corresponds to a reflection effect that is to be visually blended with the visual objected. As shown in the matte image 720, the matte image 720 includes an area 721 corresponding to the billboard screen 119. The area 721 has grey pixels (e.g. 85% pixel value). Accordingly, when the first region 710 is displayed and a visual object is simultaneously displayed based on the matte image 720, the visual object will appear to have a reflection of the clouds. The result is shown in Figure 7B, where the cloud reflection can be seen in the insertion zone (billboard screen 719) with the visual object.

In the illustrated examples, the source video material 100 and the video data 400 has three frames. However, it will be appreciated that the source video material 100 and the video data 400 can have any other number of frames.

In the illustrated examples, all of the frames of the source video material 100 have a respective insertion zone 121-A, 121-B, 121-C. However, it will be appreciated that in some examples, not all of the frames of the source video material may have an insertion zone. For example, the insertion zone or the host object 119 may not be in shot for one or more of the frames. In some examples, for such frames, the respective matte image in the video data 400 may be entirely black (e.g. all pixel values may have 0% value). Alternatively or additionally, for such frames, steps S309-S313 of the method 300 may be skipped. In examples the matte image for such frames may be omitted from the video data 400.

The visual object 200 illustrated in Figure 2 is an image. However, it will be appreciated that the visual object can be a video. At step S313, the video visual object may be displayed as a video object, for example in a web video player. The position data is used to determine the position of the video player so to match the position of the insertion zone of the current frame. The video player can be displayed based on the matte image of the current frame to apply pixel blending as discussed above. It will be appreciated that it is not necessary to synchronize the frames of a video visual object and the frames of the video data 400. Rather, the final appearance will be satisfactory provided that the correct matte image and position data is applied to video visual object.

In some examples, the visual object can be a 3D object. The insertion zone can correspond to a location or area of a surface where the 3D object is to be placed. At step S303 of the method 300, lighting data and surface or groundplane data can also be obtained for each frame of the video data. The lighting data is indicative of the lighting conditions in the respective frame. The surface/groundplane data is indicative of parameters of the surface, e.g. the position, orientation, size, etc in the respective frame. At step S313, the visual object is displayed further based on the lighting data and the surface/groundplane data corresponding to the determined frame ID. Using the lighting data and the surface/groundplane data, the 3D visual object can be made to more realistically appear on the surface. For example, the lighting data and the surface/groundplane data can be used to generate a shadow of the visual object on the surface which is consistent with the lighting conditions and the surface in each frame. The lighting data and the surface/groundplane data may be contained in the same JSON file as the position data.

The JSON file may also index the lighting data and the surface/groundplane data by the frame IDs.

In some examples, the frame IDs are not encoded in the video data 400. Instead, at step S307, the first regions 410-A, 410-B, 410-C may be displayed by a web video player that outputs the frame ID (e.g. the frame number) of the current frame that is being displayed by the web video player. At step S311, the frame ID can be used to determine the correction position data, effects data, etc. to use, as discussed above.

As discussed above, the image content 411-A, 411-B, 411-C in the insertion zones include a reflection effect. It will be appreciated that the image content of the insertion zones can also include alternative or additional effects, including shadows, grain, dust, rust, shadow, colour correction, blur, noise etc.

It will be appreciated that additional effects can be incorporated in the pixel data of the matte images of each frame of the video data 400. For example, pixel noise can be applied to the areas 421-A, 421-B, 421-C of the matte images. This will result in a grain effect being applied to the visual object when it is displayed at step S313 of the method 300. Advantageously, by applying additional effects via the matte, the method has a reduced processing load in comparison to if the effect is applied directly to the visual object.

The matte images discussed above are grayscale images. However, it will be appreciated that the matte images do not have to be grayscale images. Rather, the transparency amounts can be represented or encoded in the matte images in any other way, for example using RGB (red, green and blue) pixel values.

In the above examples, the visual object and the insertion zones are shown as a four sided polygon. It will be appreciated that the visual object and insertion zones can be any shape. For example the shape can be a polygon with any number of sides, have curved sides, and/or be circular or oval etc.

In the illustrated examples, the second regions 420-A, 420-B, 420-C are positioned below the respective first regions 410-A, 410-B, 410-C. However, it will be appreciated that the second regions can be positioned above or to the side of the first regions.

As illustrated in Figures 4A-4C, 6 and 7A-7B, the first regions of each video data 400, 600, 700 correspond to different source videos. In some examples, different video data (e.g. the video data 400, 600, 700) can be concatenated into a single video (referred to herein as master video data). The position data and the processing data associated with each video data may also be concatenated, e.g. into the same JSON file. The method 300 can be executed using the master video data with the visual object 200. Advantageously, a viewer can seamlessly view the visual object 200 in different source videos, without having to load different webpages, or reload the visual object 200.

As discussed, above, the frames of the video data are associated with frame IDs F1, F2, F3. In particular, the frame IDs F1, F2 and F3 are encoded as pixel data in third regions of the respective frames 401-A, 401-B, 401-C of the video data 400. The video data 600 and the video data 700 may be created or generated independently of the video data 400. This will mean that the frame 601 of the video data 600 may also be associated with the frame ID F1 (e.g. the frame ID F1 may be encoded in a third region of the frame 601). The frame 701 of the video data 700 may also be associated with the frame ID F1 (e.g. the frame ID F1 may be encoded in a third region of the frame 701). As such, if the frame ID F1 is determined at step S309 of the method 300, then it should be determined whether the current frame is the frame F1 of the video data 400, 600 or 700. Otherwise, it may be unknown which position and/or processing data should be used at steps S311 and S313.

Accordingly, in some examples, master video data is obtained at step S301. The master video data may have a plurality of frames $M$. The plurality of frames has frame numbers 1 to $M$. The master video data has similar features to the video data 400 described above. However, in the present example, the plurality of frames $M$ may include at least two subsets of frames. A first subset may correspond to frame numbers 1 to K-1 of the master video data, where K<M. A second subset may correspond to frame numbers K to M of the master video data. Each subset of frames may correspond to a different source video. In this example, the subsets may have the same number of frames. Each frame of the plurality of frames M is associated with a frame ID. Each frame of the first subset 1 to K-1 may be associated with a same frame ID as a respective frame of the second subset K to M. For example each frame of the first subset 1 to K-1 may be associated with a respective frame ID F1 to F(K-1), each of which are unique within the first subset. Each frame of the second subset K to M may be associated with a respective one of the same frame IDs F1 to F(K-1). It can be considered that each frame i and K-1+$i$ are both associated with the frame ID F$i$, for i = 1, ..., K-1. The frame IDs may be encoded in third regions of the frames, as described above.

The set of position data (and optionally the processing data) obtained at step S303 may include position data (and optionally processing data) for each of the frame numbers 1 to M as described above. As such, M lines or instances of position (and optionally processing) data may be obtained. The position/processing data may be ordered in the sequence of the frame numbers 1 to M, for example as separate items or lines in the JSON file.

The step S307 of the method 300 may begin at a time t. At step S309, the frame ID F$i$ of the current frame is determined as discussed above. For example, the frame ID F$i$ can be decoded from third region of the current frame as discussed above. The step S309 may further include determining a current time indicative of the time elapsed since the time t. For example, if the first regions of the master video data are being played by a web video player (e.g. HTML5 player), then the current time can be read or extracted from the video player.

At step S311, position data (and optionally processing data) associated with the current frame may be identified based on at least the identified frame ID F$i$ and the current time. The starting frame number of each subset of frames may be known and also used. For example the frame numbers 1 and K may be known as the starting frames of each respective subset. Such information may be included in the same JSON file as the position data and the processing data, or otherwise may be provided in a separate (e.g. JSON) file. The frame rate may also be used to identify the position/processing data.

The frame number i in the first subset 1 to K-1 may be identified based on the frame ID F$i$ because that frame number is associated with the frame ID F$i$. The frame number K-1+$i$ in the second subset K to M may also be identified, because that frame number is also associated with the frame ID F$i$. A first estimate of the current time is calculated by assuming that the frame number $i$ is the current frame. For example the first estimate of the current time is calculated based on the frame number $i$ and the frame rate of the master video data. The frame number $i$ can be multiplied by the frame rate to calculate the first estimate of the current time. A second estimate of the current time is calculated by assuming that the frame number K-1+$i$ is the current frame. For example the second estimate of the current time is calculated based on the frame number K-1+$i$ and the frame rate of the master video data. The frame number K-1+$i$ can be multiplied by the frame rate to calculate the second estimate of the current time.

The first and the second estimates of the current time are compared to the current time to determine which of the estimated current times are closest to the current time. For example a first error can be calculated by subtracting the current time from the first estimate of the current time. A second error can be calculated by subtracting the current time from the second estimate of the current time. If the first estimate of the current time is closest to the current time (e.g. the first error is less than the second error), then it can be determined that the frame number $i$ is the current frame. In this case, the position data (and optionally the processing data) associated with the frame $i$ is identified and used in steps S311 and S313. For example, the correct position/processing data can be found by identifying the $i$'th line or instance of data in the JSON file. If the second estimate of the current time is the closest to the current time (e.g. the second error is less than the first error), then it can be determined that the frame number K-1+$i$ is the current frame. In this case, the position data (and optionally the processing data) associated with the frame K-1+$i$ is identified and used in steps S311 and S313. For example, the correct position/processing data can be found by identifying the K-1+$i$'th line or instance of data in the JSON file. The position/processing data used therefore corresponds to the correct current frame, and therefore the visual object 200 will appear visually incorporated with the source image of the current frame.

It will be appreciated that the subsets may be different sizes. As such, some frame IDs may not be used in all of the subsets. Furthermore, the master video data may include more than two subsets of frames.

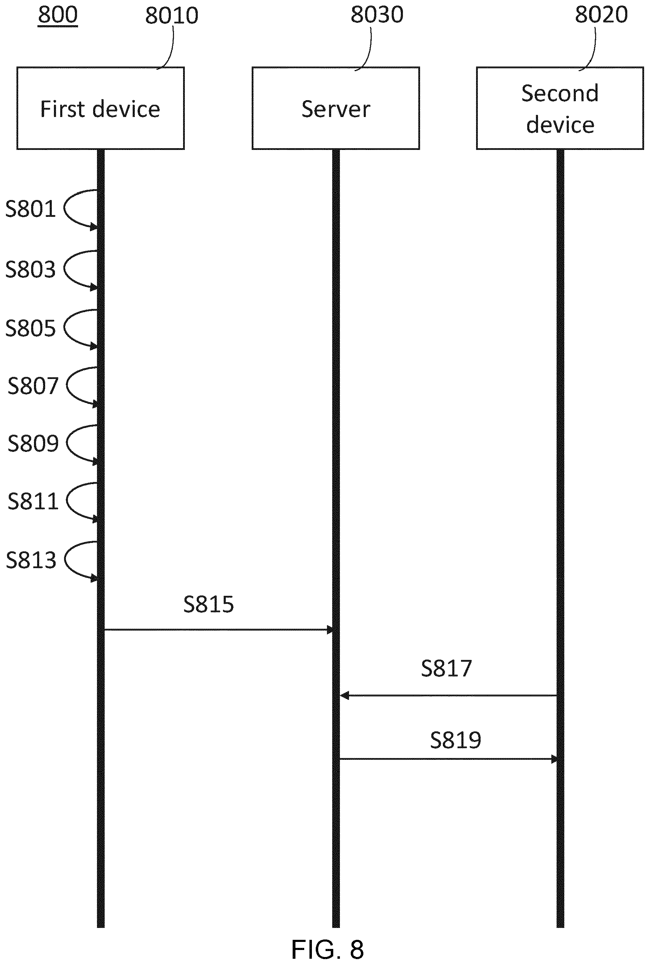

Figure 8 illustrates a method 800 of generating and communicating video data (e.g. the video data 400) according to an example of the present disclosure. As shown, the method 800 performed between a first device 8010, a second device 8020 and a server 8030. The first device 8010 may be a desktop computer that hosts compositing software. The second device 8020 may be any of a desktop computer, laptop, tablet, mobile phone etc. The device 8020 may host a web browser. The first device 8010 and the second device 8020 are in data communication with one another, over a network (not shown) via the server 8030.

At step S801, source video material 100 comprising the source images 103-A, 103-B, 103-C is obtained at the first device 8010.. For example the source video material can be received over a network or loaded it from a computer readable storage medium. Each of the source images 103-A, 103-B, 103-C has a respective insertion zone 121-A, 121-B, 121-C as described above.

At step S803, image content 411-A, 411-B, 411-C of the insertion zones 121-A, 121-B, 121-C is generated, for example using the compositing software. As discussed above, the image content can include a reflection, shadow or other effects to eventually be blended with the visual object.

At step S805, for each of the source images 103-A, 103-B, 103-C, a respective matte image 420-A, 420-B, 420-C is generated, for exampling using the compositing software. As discussed above, each matte image indicates a level of blending to be applied between the image content of the insertion zone and the visual object.

At step S807, the video data 400 is generated based on the source images, the image content of the insertion zones and the matte images. The video data 400 is as described above. The video data 400 can also be generated to include a third region in each frame as described above, which encodes the unique ID of the frame.

At step S809, the position data is generated for each frame of the video data 400. As discussed above, each position data indicates a position (e.g. size, shape, location) of the insertion zone in the first region of the respective frame. Each position data is also associated with (e.g. indexed or ordered by) the frame ID of the respective frame.

Optionally, at step S811, processing data may be generated for each frame of the video data 400. As discussed above, each processing data includes at least one image processing parameter for applying to the visual object, e.g. such that the visual object appears visually incorporated with the source video material when displaying a source image of the source video material and the visual object in the insertion zone of the source image. Each processing data is also associated with (e.g. indexed or ordered by) the frame ID of the respective frame. The generated video data 400, position data and optionally the processing data may enable an electronic device to perform the method 300 as described above.

Optionally, at step S813 the steps S801 to S811 can be repeated for a different second source video to generate second video data. The second video data can then be concatenated, appended or otherwise combined with the video data 400 to form master video data as described above. The position/processing data generated at steps S809 and S811 in respect of the second video data can also be concatenated or appended with the position/processing data of the video data 400. Furthermore, data indicative of the starting frame number of the video data 400 and the starting frame number of the second video data can be generated. The step S813 may be repeated for any number of different source videos. This may allow a user of the second device 8020 to seamlessly view the visual object 200 in different source videos, without having to load different webpages, or reload the visual object 200, as discussed above.

At step S815, the video data 400, the position data and optionally the processing data is transmitted to and stored at the server 8030 over a network. Where step S813 is executed, the data indicative of the starting frame numbers may also be transmitted and stored at the server 8030.

At step S817, the server 8030 receives a request from the second device 8020 over a network. The second device 8020 sends the request to the server 8030 over the network.

At step S819, in response to the request, the server 8030 transmits the video data 400, the position data and optionally the processing data over the network to the second device 8020. Where step S813 is executed, the data indicative of the starting frame numbers may also be transmitted to the second device 8020. The second device 8020 receives said data from the server 8030 over the network. Accordingly, the method 800 may enable the second electronic device 8020 to perform the method 300 as described above.

The aspects of the present disclosure described in all of the above may be implemented by software, hardware or a combination of software and hardware. Any electronic device or server can include any number of processors, transceivers, displays, input devices (e.g. mouse, keyboard, touchscreen), and/or data storage units that are configured to enable the electronic device/server to execute the steps of the methods described herein. The functionality of the electronic device/server may be implemented by software comprising computer readable code, which when executed on the processor of any electronic device/server, performs the functionality described above. The software may be stored on any suitable computer readable medium, for example a non-transitory computer-readable medium, such as read-only memory, random access memory, CD-ROMs, DVDs, Blue-rays, magnetic tape, hard disk drives, solid state drives and optical drives. The computer-readable medium may be distributed over network-coupled computer systems so that the computer readable instructions are stored and executed in a distributed way.

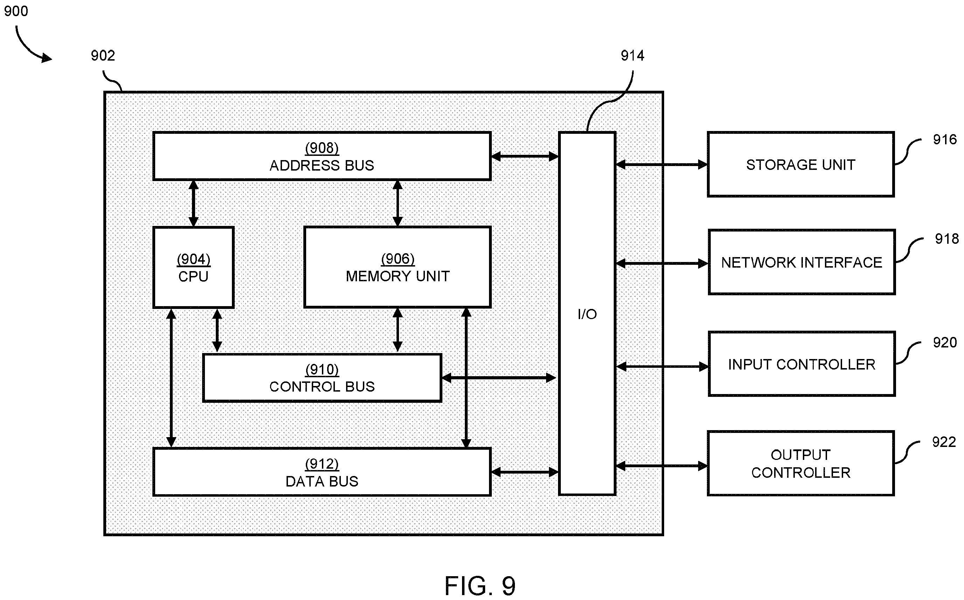

Figure 9 shows a non-limiting example of an electronic device suitable for performing any of the above described aspects of the present disclosure. Figure 9 shows a block diagram of an example computing system.

A computing system 900 can be configured to perform any of the operations disclosed herein. Computing system includes one or more computing device(s) 902. The one or more computing device(s) 902 of the computing system 900 comprise one or more processors 904 and a memory 906. The one or more processors 904 can be any general-purpose processor(s) configured to execute a set of instructions (i.e., a set of executable instructions). For example, the one or more processors 904 can be one or more general-purpose processors, one or more field programmable gate array (FPGA), and/or one or more application specific integrated circuits (ASIC). In one example, the one or more processors 904 include one processor. Alternatively, the one or more processors 904 include a plurality of processors that are operatively connected. The one or more processors 904 are communicatively coupled to the memory 906 via an address bus 908, a control bus 910, and a data bus 912. The memory 906 can be a random-access memory (RAM), a read-only memory (ROM), a persistent storage device such as a hard drive, an erasable programmable read-only memory (EPROM), and/or the like. The one or more computing device(s) 902 further comprise an I/O interface 914 communicatively coupled to the address bus 908, the control bus 910, and the data bus 912.

The memory 906 can store information that can be accessed by the one or more processors 904. For instance, memory 906 (e.g., one or more non-transitory computer-readable storage mediums, memory devices) can include computer-readable instructions (not shown) that can be executed by the one or more processors 904. The computer-readable instructions can be software written in any suitable programming language or can be implemented in hardware. Additionally, or alternatively, the computer-readable instructions can be executed in logically and/or virtually separate threads on the one or more processors 904. For example, the memory 906 can store instructions (not shown) that when executed by the one or more processors 904 cause the one or more processors 904 to perform operations such as any of the operations and functions for which the electronic device 900 is configured, as described herein. In addition, or alternatively, the memory 906 can store data (not shown) that can be obtained, received, accessed, written, manipulated, created, and/or stored. In some implementations, the computing device(s) 902 can obtain from and/or store data in one or more memory device(s) that are remote from the computing system 900.

The computing system 900 further comprises a storage unit 916, a network interface 918, an input controller 920, and an output controller 922. The storage unit 916, the network interface 918, the input controller 920, and the output controller 922 are communicatively coupled to the computing device(s) 902 via the I/O interface 914.

The storage unit 916 is a computer readable medium, preferably a non-transitory computer readable medium or non-transitory machine readable medium, comprising one or more programs, the one or more programs comprising instructions which when executed by the one or more processors 904 cause the computing system 900 to perform the method steps of the present disclosure. Alternatively, the storage unit 916 is a transitory computer readable medium. The storage unit 916 can be a persistent storage device such as a hard drive, a cloud storage device, or any other appropriate storage device.

The network interface 918 can be a Wi-Fi module, a network interface card, a Bluetooth module, and/or any other suitable wired or wireless communication device. In one example, the network interface 918 is configured to connect to a network such as a local area network (LAN), or a wide area network (WAN), the Internet, or an intranet.

**Claims**

1. A computer implemented method of displaying source video material and a visual object so that the visual object appears visually incorporated with the source video material, the source video material comprising a plurality of source images, the method comprising:

   obtaining video data comprising a plurality of frames, wherein each frame has a first region including a respective source image of the source video material, each source image comprising an insertion zone that is suitable for insertion of the visual object;
   obtaining, for each frame, position data indicative of a position of the insertion zone in the first region of the frame;
   obtaining a visual object;
   sequentially displaying, at a frame rate and in a display area, the first region of each frame; and
   as the first region of a current frame is being displayed in the display area:

      determining a position for the visual object in the display area based on the position data, such that the visual object will appear within the insertion zone in the first region of the current frame when the visual object is displayed in the display area at the determined position, and
      displaying the visual object in the display area at the determined position.

2. The method of claim 1, wherein each frame of the video data further comprises a second region that encodes blend information, the blend information being indicative of one or more levels of blending to be applied between the visual object and image content of the insertion zone,
   wherein when the visual object is displayed in the display area at the determined position, the image content of the insertion zone is blended with the visual object based on the blend information encoded in the second region of the current frame.

3. The method of claim 2, wherein for each pixel of the insertion zone, the second region comprises a pixel that encodes a level of blending to be applied between the pixel in the insertion zone and a corresponding pixel of the visual object.

4. The method of any preceding claim, wherein:

each frame of the video data is associated with a unique ID, and
wherein for each frame, the position data indicative of the position of the insertion zone in the first region of the frame is associated with the unique ID of the frame, and
wherein the method further comprises, as the first region of the current frame is being displayed in the display area:

determining the unique ID associated with the current frame, and
determining the position for the visual object in the display area based on the position data that is associated with the determined unique ID.

5. The method of claim 4, wherein for each frame, the frame comprises a third region, wherein the third region encodes the unique ID that is associated with said frame, and wherein determining the unique ID associated with the current frame comprises decoding the unique ID from the third region of the current frame.

6. The method of any of claims 1 to 3, wherein the plurality of frames of the video data comprises at least a first subset of frames and a second subset of frames,

wherein each frame of the first subset is associated a respective frame ID, and each frame of the second is associated with the same frame ID to a respective frame of the first subset;
wherein the method further comprises:

sequentially displaying from a time $t$, at a frame rate and in a display area, the first region of each frame of the plurality of frames; and
as the first region of the current frame is being displayed in the display area:

determining the frame ID associated with the current frame, and a current time indicative of a time elapsed since the time $t$,
identifying the position data associated with the current frame based on the current time and the determined frame ID, and
determining the position for the visual object in the display area based on the identified position data, such that the visual object will appear within the insertion zone in the first region of the current frame when the visual object is displayed in the display area at the determined position,

optionally wherein each frame of the plurality of frames comprises a third region, wherein the third region of each frame encodes the respective frame ID and wherein the frame ID is determined by decoding the frame ID from the third region of the current frame.

7. The method of claim 6, wherein identifying the position data associated with the current frame comprises:

calculating a first estimate of the current time based on a frame of the first subset that is associated with the determined frame ID, and a second estimate of the current time based on a frame of the second subset that is associated with the determined frame ID;
calculating a first error between the current time and the first estimate of the current time, and a second error between the current time and the second estimate of the current time;
if the first error is less than the second error, then identifying the position data that is associated with said frame of the first subset; and
if the first error is greater than the second error, then identifying the position data that is associated with said frame of the second subset.

8. The method of any preceding claim, wherein each frame of the video data is associated with a unique ID, the method further comprising:

obtaining, for each frame, processing data comprising at least one image processing parameter suitable for applying to the visual object, the processing data being associated with the unique ID of the frame; and

as the first region of the current frame is being displayed in the display area:

processing the visual object based on the processing data associated with the determined unique ID, optionally wherein the processing data comprises one or more of: a blur effect parameter, a grain effect parameter or a colour correction parameter.

9. The method of any preceding claim, wherein at least one of the following applies:

(a) the position data is indicative of boundaries of the insertion zone, optionally wherein the position data comprises pixel coordinates, the pixel coordinates corresponding to vertices of the insertion zone;
(b) the position data is indicative of a transformation to be applied to the visual object such that the visual object will appear within the insertion zone in the first region of the current frame when the visual object is displayed in the display area, the transformation comprising one or more of a rotation and a translation.

10. A computer-implemented method comprising:
transmitting over a network to an electronic device:

video data comprising a plurality of frames, wherein each frame comprises a first region comprising a respective source image of source video material, each source image comprising an insertion zone that is suitable for insertion of a visual object; and
for each frame, position data indicative of a position of the insertion zone in the first region of the frame for use by the electronic device to determine a position for the visual object, such that when the first region of the frame is displayed in a display area and the visual object is displayed in the display area at the determined position the visual object will appear within the insertion zone.

11. The method of claim 10, wherein at least one of the following applies:

(a) each frame of the video data further comprises a second region that encodes blend information, the blend information being indicative of one or more levels of blending to be applied between image content of the insertion zone and the visual object to be positioned in the insertion zone;
(b) the method further comprises transmitting, for each frame, processing data comprising at least one image processing parameter suitable for applying to the visual object;
(c) the method further comprises receiving a request from the electronic device over the network, and transmitting the video data, the position data and optionally the processing data in response to the request.

12. A computer implemented method comprising:

obtaining source video material comprising a plurality of source images, each source image comprising an insertion zone that is suitable for insertion of a visual object;
generating video data based on the source images, the video data comprising a plurality of frames, wherein each frame has a first region including a respective source image of the source video material and a respective insertion zone; and
generating, for each frame of the video data, position data indicative of a position of the insertion zone in the first region of the frame.

13. The method of claim 12, further comprising:

for each source image, generating a matte image that encodes blend information, the blend information being indicative of one or more levels of blending to be applied between image content of the insertion zone in the source image and a visual object; and
generating the video data further based on the matte images, wherein each frame of the video data has a second region comprising a respective matte image.

14. The method of claim 12 or 13, wherein at least one of the following applies:

(a) the method further comprises generating image content in each of the insertion zones;
(b) the method further comprises generating, for each frame of the video data, processing data comprising at least one image processing parameter suitable for applying to a visual object such that the visual object appears visually incorporated with the source video material when displaying a source image of the source video material and the visual object in the insertion zone of the source image.

15. A computer-readable medium comprising computer executable instructions stored thereon, which when executed by a computing device cause the computing device to perform the method according to any preceding claim.

16. An electronic device configured to perform the method according to any of claims 1 to 14.

100

101-A    125    121-A    119    123

103-A

FIG. 1A

100

101-B    121-B    119

125

124

123

103-B

FIG. 1B

100

101-C

121-C

119

125

123

103-C

FIG. 1C

200

VISUAL OBJECT

FIG. 2

300

Obtain video data 400 — S301

Obtain position data — S303

Obtain visual object — S305

Render/display the first regions of the video data 400 — S307

Determine current frame ID — S309

Determine a position for the visual object — S311

Display the visual object based on the matte image — S313

FIG. 3

FIG. 4A

FIG. 4B

FIG. 4C

FIG. 5A

FIG. 5B

500

121-C

119    411-C

125

VISUAL OBJECT

200

412-C

123

103-C

FIG. 5C

600

601

610

620

FIG. 6

FIG. 7A

FIG. 7B

FIG. 8

FIG. 9

EP 4 283 619 A1

Europäisches
Patentamt

European
Patent Office

Office européen
des brevets

# EUROPEAN SEARCH REPORT

Application Number

EP 22 17 4904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/071613 A1 (DHARSSI FATEHALI T [CA] ET AL) 12 March 2015 (2015-03-12) | 1-3,9-16 | INV. G11B27/036 |
| Y | * paragraphs [0055], [0099] – [0109], | 4,5,8 | G11B27/10 |
| A | [0124] – [0126], [0138] * | 6,7 | G11B27/11 |
| | * paragraphs [0144], [0155] * | | G11B27/30 |
| | ----- | | G06Q30/02 |
| X | US 2013/091519 A1 (MCLAUCHLAN PHILIP [GB] ET AL) 11 April 2013 (2013-04-11) | 1,3,9-16 | H04N21/00 |
| A | * paragraphs [0120], [0153], [0343], [0360], [0379] * | 4-8 | |
| | ----- | | |
| Y | EP 1 098 522 A1 (SONY UK LTD [GB]) 9 May 2001 (2001-05-09) | 4,5,8 | |
| | * paragraphs [0006], [0020], [0021], [0026], [0056] * | | |
| | ----- | | |

TECHNICAL FIELDS
SEARCHED      (IPC)

G11B
H04N
G06Q

The present search report has been drawn up for all claims

| Place of search | Date of completion of the search | Examiner |
|---|---|---|
| The Hague | 31 October 2022 | Maetz, Arnaud |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

 .....................................................................
& : member of the same patent family, corresponding
　　document

EPO FORM 1503 03.82 (P04C01)

## ANNEX TO THE EUROPEAN SEARCH REPORT
## ON EUROPEAN PATENT APPLICATION NO.

EP 22 17 4904

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2022

| Patent document cited in search report | | Publication date | Patent family member(s) | | Publication date |
|---|---|---|---|---|---|
| US 2015071613 | A1 | 12-03-2015 | US 2015071613 A1 | | 12-03-2015 |
| | | | WO 2013152439 A1 | | 17-10-2013 |
| US 2013091519 | A1 | 11-04-2013 | NONE | | |
| EP 1098522 | A1 | 09-05-2001 | EP 1098522 A1 | | 09-05-2001 |
| | | | JP 4253113 B2 | | 08-04-2009 |
| | | | JP 2001216763 A | | 10-08-2001 |

EPO FORM P0459

For more details about this annex : see Official Journal of the European Patent Office, No. 12/82